# EUROPEAN PATENT APPLICATION

(11) **EP 4 769 206 A1**
(43) Date of publication of application: **01.07.2026**
(21) Application number: 25227424.6
(22) Date of filing: 29.12.2025
(51) Int. Cl.: G06F 40/30, G06N 3/08, G06N 5/022

(54) **LLM-BASED SYSTEM AND METHOD FOR PROFILING CHATBOT USERS**

(30) Priority: 31.12.2024 IL 31812124
(71) Applicant: Deutsche Telekom AG, 53113 Bonn (DE)
(72) Inventor: MIMRAN, David, 6215505 Tel Aviv (IL); SHABTAI, Asaf, 7684200 Hulda (IL); ELOVICI, Yuval, 7986400 Arugot (IL); MEIDAN, Yair, 7404503 Ness-Ziona (IL); DAVID, Shahaf, 5340733 Givatayim (IL); KAISER, Peter, 50937 Köln (DE); LEHMAN, Heiko, 12587 Berlin (DE)
(74) Representative: Schmidt, Christian

(57) **Abstract**

An LLM-based method for profiling chatbot users' technical proficiency and performing adaptation in the chatbot response, comprising the step of receiving encountered problem by the troubleshooting chatbot via a user prompt; using a profile inference LLM to obtain inferred profiles of chatbot users' technical proficiency regarding cybersecurity troubleshooting, by analyzing current prompt as entered by the user, from a data storage; the most recently updated user profile, which encapsulates the past user data; troubleshooting-oriented cybersecurity taxonomy consisting of proficiency domains and subdomains; a collection of inferred profiles of all users; hardware, software or networking-related data collected from the user's device; generating a vector of profile scores that quantify troubleshooting-oriented cybersecurity proficiency subdomains; updating the user's inferred profile by sending the inferred profile to the collection; replacing the older profile of the user by an updated profile; sending the inferred profile to a response adaptation LLM, along with the response generated by the chatbot; adapting the technical instructions, produced by the chatbot to the inferred user's profile; sending the profile-adapted response to the user, to follow the chatbot's instructions.

## Description

### Field of the Invention

The present invention relates to the field of cybersecurity. More particularly, the present invention relates to LLM-based system and method for implicit and gradual profiling of chatbot users' technical proficiency in the context of cybersecurity troubleshooting, and consequent chatbot response adaptation.

### Background for the Invention

In recent years, chatbots (a chatbot is a software or computer program that simulates human conversation or *chatter* through text or voice interactions) have become prevalent in a large variety of application domains, including customer service [8], technical support [7], sales [5], and other services [2].

The adaptation of a chatbot's communication style to a user's profile is highly beneficial in improving the user's experience [1]. Profile-based response adaptation also assists in better achieving the goals set by the chatbot's operator [11], such as maintaining a high level of customer support, preserving a satisfied, loyal customer base, enjoying good reputation, converting prospects to paying customers, etc.

Existing organizations such as Managed Cybersecurity Service Providers (MSSPs - they function as third-party entities, offering businesses outsourced monitoring and management of their security devices and systems)provide cybersecurity troubleshooting services to customers (of chatbot operators) via a chatbot, which relies on a Large Language Model (LLM - a model that is trained on immense amounts of data, making it capable of understanding and generating natural language and other types of content to perform a wide range of tasks) and is capable of providing a reliable, high quality support in cybersecurity troubleshooting, possibly by fine-tuning a base-model to this domain [9], using relevant documents in a Retrieval-Augmented Generation architecture (RAG - the process of optimizing the output of a large language model, so it references an authoritative knowledge base outside of its training data sources before generating a response) [4], or any other technique of LLM domain adaptation [10].

It is therefore an object of the present invention to provide a system and a method for implicit and gradual profiling of chatbot users' technical proficiency regarding cybersecurity troubleshooting, and consequent chatbot response adaptation.

It is a further object of the present invention to provide a system and a method for adapting the chatbot's responses using an inferred profile of a chatbot's user, to enhance the user experience and outcomes of the chatbot's operator.

Other objects and advantages of the invention will become apparent as the description proceeds.

### Summary of the Invention

An LLM-based method for profiling chatbot users' technical proficiency and performing adaptation in the chatbot response, comprising the step of:
a) receiving encountered problem by the troubleshooting chatbot via a user prompt;
b) using a profile inference LLM to obtain inferred profiles of chatbot users' technical proficiency regarding cybersecurity troubleshooting, by analyzing:
   b.1) current prompt as entered by the user, from a data storage;
   b.2) the most recently updated user profile, which encapsulates the past user data;
   b.3) troubleshooting-oriented cybersecurity taxonomy consisting of proficiency domains and subdomains;
   b.4) a collection of inferred profiles of all users;
   b.5) hardware, software or networking-related data collected from the user's device;
c) generating a vector of profile scores that quantify troubleshooting-oriented cybersecurity proficiency subdomains;
d) updating the user's inferred profile by:
   c.1) sending the inferred profile to the collection;
   c.2) replacing the older profile of the user by an updated profile;
e) sending the inferred profile to a response adaptation LLM, along with the response generated by the chatbot;
f) adapting the technical instructions, produced by the chatbot to the inferred user's profile; and
g) sending the profile-adapted response to the user, to follow the chatbot's instructions.

The method may further comprise the step of allowing the user to initiate further interactions with the chatbot if further instructions or clarifications are required.

The method may further comprise the step of adjusting the terminology and explanation depth of the chatbot response, to generate a personalized interaction.

The inferred profile may be generated by:
a) receiving as input a variety of user- and end point-related informative inputs and returning as output a numerical vector representation of the user's inferred profile;
b) assigning a score to each subdomain in the taxonomy.

The inferred profile may be generated using one or more of the following:
- machine learning (ML);
- deep learning (DL);
- natural language processing (NLP);
- Large Language Models (LLMs).

A user's prompt may be associated by the profile inference LLM to a subdomain for which there is no past user interaction.

The method may further comprise the step of performing gradual profile calibration using weighted moving average among past and current proficiency scores.

The method may further comprise the step of performing gradual profile calibration using a feedback loop which is based on the subsequent user prompt.

An LLM-based system for profiling the technical proficiency of chatbot users and performing adaptation in the chatbot response, comprising:
computerized device comprises at least one processor and associated memory for storing operational software, which is adapted to:
   a) receive an encountered problem by a troubleshooting chatbot via a user prompt;
   b) use a profile inference LLM to obtain inferred profiles of chatbot users' technical proficiency regarding cybersecurity troubleshooting, by analyzing:
      b.1) current prompt as entered by the user, from a data storage;
      b.2) the most recently updated user profile, which encapsulates the past user data;
      b.3) troubleshooting-oriented cybersecurity taxonomy consisting of proficiency domains and subdomains;
      b.4) a collection of inferred profiles of all users;
      b.5) hardware, software or networking-related data collected from the user's device;
   c) generate a vector of profile scores that quantify troubleshooting-oriented cybersecurity proficiency subdomains;
   d) update the user's inferred profile by:
      c.1) sending the inferred profile to the collection;
      c.2) replacing the older profile of the user by an updated profile;
   e) send the inferred profile to a response adaptation LLM, along with the response generated by the chatbot;
   f) adapt the technical instructions, produced by the chatbot to the inferred user's profile; and
   g) send the profile-adapted response to the user, to follow the chatbot's instructions.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows a block diagram of the key entities, objects, and data flow in our proposed system; and
- Fig. 2 shows a hierarchical diagram of the proposed taxonomy for cybersecurity troubleshooting-oriented technical proficiency profiling.

### Detailed Description of the Invention

Profiling chatbot users is an essential step for efficient adaption of the chatbot's responses to the users' needs, and preferred communication style. The present invention provides a system and method for implicitly and gradually inferring the profile of a chatbot's user, in the context of cybersecurity troubleshooting, and for adapting the chatbot's responses accordingly, for the benefit of both the user and the chatbot's operator. The proposed method of the present invention supports cold-start scenarios (cold-start is a potential problem in computer-based information systems which involves a degree of automated data modelling. It concerns the issue that the system cannot draw any inferences for users or items about which it has not yet gathered sufficient information), as well as continuous profile refinement. Another novel aspect is the proposed taxonomy (a methodology that systematically classifies elements in a defined hierarchical form) for profiling the technical proficiency of users, when confronted with cybersecurity troubleshooting.

A chatbot is designed to provide cybersecurity troubleshooting assistance (abbreviated hereinafter as the chatbot) to a versatile, unrestricted audience. A user of any technical proficiency background may turn to the chatbot with inquiries ranging from, e.g., how to run an anti-virus scan, to dealing with local files and folders that have suddenly become inaccessible. This user may or may not have experience with cybersecurity troubleshooting, with related jargon, or even with general computer-related tasks such as software installations, or error message understanding. To maximize troubleshooting efficiency and to reduce user frustration, the responses produced by the assumed chatbot is adapted to the user's technical proficiency level. For instance, a novice user may prefer receiving a long sequence of easy-to-follow instructions, while an expert may prefer a concise instruction which includes technical terms. In any case, the challenge is to infer the user's technical proficiency as quickly and accurately as possible, and with minimum interference to the user's goal, i.e., getting assistance to overcome a cybersecurity related issue.

In order to enhance user experience, the proposed system is adapted to infer the user's profile as implicitly as possible, i.e., with minimal disturbance or intervention in the user's interactions (such as directly asking users about their knowledge, experience, or preferences). Inferring the user's profile is carried out gradually and continuously. This is done by using not only the most recent interaction, but rather, also past user data, which is captured via the inferred profile accumulated so far. Inferring the user's profile gradually and continuously enhances the robustness and allows time-dependent profile adjustments, since profiles may change over time.

The present invention provides an LLM-based system and method for implicit and gradual profiling of chatbot users' technical proficiency, in the context of cybersecurity troubleshooting, and consequent chatbot response adaptation. Making adaptations in the chatbot's responses using the inferred profile, enhances both the user experience, and business outcomes of the Managed Cybersecurity Service Providers (MSSPs) which operates the chatbot. The system of the present invention augments existing chatbots that were trained to provide cybersecurity-related troubleshooting support, and the key functionality of the system of the present invention is adding the capabilities of (1) implicit and gradual user profiling and (2) subsequent profile-aware response adaptation, for automatically personalized chatbot-user interaction.

The proposed system gradually infers a user's profile by implicitly analyzing a variety of data sources. As the profile inference system refines its understanding of the user's profile over time, the profile inference system adapts the chatbot's responses accordingly, by adjusting terminology, explanation depth, and so forth, to generate a personalized interaction. This personalized interaction improves the user engagement and satisfaction by providing personally tailored support, thereby ultimately creating a more effective and user-friendly chatbot experience.

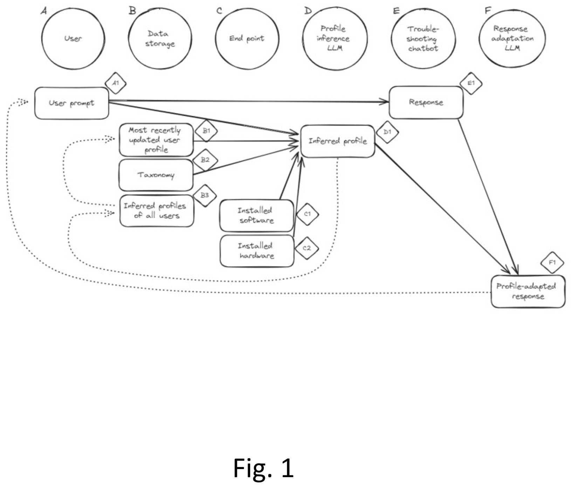

Fig. 1 illustrates the architecture of the proposed system, according to an embodiment of the invention. The data flow among the proposed system entities is also illustrated in Fig. 1. At the first step, a user (A) encountered a cybersecurity-related problem, and thus turns to the troubleshooting chatbot (E), for assistance. At the next step, the user conveys the encountered problem to the troubleshooting chatbot (E) via a user prompt A1 (a user prompt is a simple UI mechanism for prompting the user to make a selection, by creating a dialog box with a message, buttons for the choices, and a dismiss button. Then the user is invited to enter his choice via the UI).

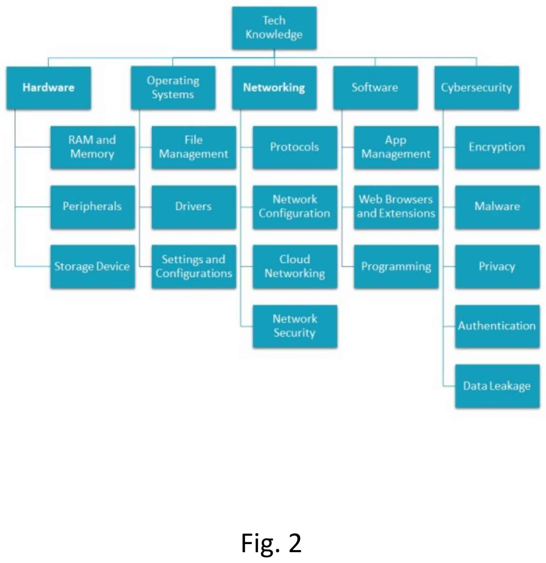

At the next step, the troubleshooting chatbot (E) generates a response (E1) to the user prompt (A1) entered by the user. During that time, a dedicated profile inference LLM (D) implicitly infers the user's profile (D1) by retrieving several inputs from the following various sources (which are complementary to each other):
- the current prompt as entered by the user, from a dedicated data storage (B);
- the most recently updated user profile (B1) which encapsulates the past user data;
- the troubleshooting-oriented cybersecurity taxonomy (B2 - a structured system for classifying and organizing cyber threats, risks, skills, and incidents to standardize language, improve analysis, and guide defense strategies), presented in Fig. 2;
- a collection (B3) of the inferred profiles of all users.

Additional inputs are retrieved from the end point on which the issue was encountered (C) using a dedicated software utility operated by the profile inference LLM (the use of LLMs to automatically generate comprehensive user profiles by analyzing their online activities or interactions):
- a list of installed software and applications (C1)
- a list of installed hardware (C2).
- networking-related data collected from the user's device, which may comprise a list of installed software and applications, a list of installed hardware, etc.

Based on this variety of inputs, the profile inference LLM (D) determines the user's profile (D1) with respect to the taxonomy, by performing the following steps:
At the first step, the inferred profile is sent to the collection (B3) of the inferred profiles of all users, and replaces the older profile of the user.

At the next step, the inferred profile is sent to the response adaptation LLM (F), along with the response (E1) generated by the chatbot. At this step, the technical instructions, which were independently produced by the chatbot (and are assumed to be technically correct), are adapted to the inferred user's profile in order to enhance the user's experience.

At the next step, the profile-adapted response (F1) is sent to the user, to follow the chatbot's instructions. If further instructions or clarifications are required, the user can initiate another iteration from prompting to receiving a (profile-adapted) response from the chatbot.

The profile inference method is essentially an algorithm which receives as input a variety of user-related, potentially-informative inputs (A1, B1, B2, B3, C1, and C2, as illustrated in Fig. 1), and accordingly, returns as output a numerical vector representation of the user's inferred profile (D1). In order to assign a score (for example, ranging from 1 to 5) to each subdomain in the taxonomy, the profile inference algorithm retrieves implicit clues and processes them, as follows:
- if the current prompt includes technical terms such as 'cryptojacking' or 'distributed denial of service', this implies that the user is likely to be highly knowledgeable with malware (corresponding to score 4 or 5);
- if the list of installed software includes, e.g., Wireshark (an open source tool that analyzes network traffic in real-time for Windows, Mac, Unix, and Linux systems. It captures data packets passing through a network interface and translates that data into valuable information for cybersecurity teams) [3] then the user is probably proficient with network security;
- if, for example, a previous user prompts regarding display settings included phrases such as "I don't quite understand your instructions, please explain them again, step by step", then a relatively low score (1 or 2) is assigned to the 'Settings and configurations' sub-domain of the taxonomy.

The profile inference algorithm basically maps implicit user and end point-related clues to the vector of profile scores that quantify troubleshooting-oriented cybersecurity proficiency subdomains. This profile inference algorithm can be implemented using various tools from the field of machine learning (ML), deep learning (DL), natural language processing (NLP) in general, and/or LLM in particular.

A user's prompt may be associated by the profile inference LLM to a subdomain for which there is no past user interaction, or too few implicit clues (also known as the 'cold start' problem [12]).

In such scenarios, if there is a past user interaction which is associated with other subdomains, the profile inference algorithm applies an approach similar to collaborative filtering (an information retrieval method that recommends items to users based on how other users with similar preferences and behavior have interacted with that item. In other words, collaborative filtering algorithms group users based on behavior and use general group characteristics to recommend items to a target user) [6]. Therefore, patterns inferred from past users can be utilized to assess the current user's proficiency in a given subdomain, for which there exists little or no implicit clues. An example for such a pattern could be "a user who is highly proficient in subdomain 1 and in subdomain 2 is likely to be proficient also in subdomain 3".

The profile inference method is adapted to support gradual profile calibration using two mechanisms:
(1) weighted moving average (a trend-following indicator that gives more importance (weight) to recent data points) among past and current proficiency scores. After each user prompt, the newly-generated scores vector is weighed against the previous scores vector. This weighted moving average takes into account considerations such as the relative importance of new implicit clues from the most recent user prompt, and the time passed since the last profile update (e.g., a year-old profile should have less weight than a week-old profile).
(2) a feedback loop which is based on the subsequent user prompt. The profile inference method identifies over- and under-estimations of a user's proficiency, based on the contents and sentiment expressed in the user's next prompt.

For example, a novice user which mistakenly receives a response with too many technical terms may complain about it afterwards, and vice versa. These two mechanisms are illustrated in Fig. 1, where two of the key profile inference LLM's inputs are the current user prompt (A1) and most recently updated user profile (B1).

Fig. 2 shows a hierarchical diagram of the proposed taxonomy for cybersecurity troubleshooting-oriented technical proficiency profiling. In this example, the technical knowledge of a user comprises five domains, each of them is an aggregation of multiple subdomains:

### Hardware domain

This domain includes three subdomains: RAM and memory, peripherals and storage devices

### Operating system domain

This domain includes three subdomains: file management, drivers, setting and configurations

### Networking domain

This domain includes four subdomains: protocols, network configuration, cloud networking and network security

### Software domain

This domain includes three subdomains: application management, web browsers and extensions and programming

### Cybersecurity domain

This domain includes three subdomains: encryption, malware, privacy, authentication and data leakage

The response adaptation method can also be implemented using ML, DL, NLP, and LLM tools. This response adaptation method takes as input the original response (E1) generated by the chatbot, as well as the inferred profile (D1), and returns as output the same instructions for solving the user's issue, which is adapted to a communication style that is better tailored to the user's (inferred) profile (F1). For example, if the troubleshooting chatbot's response is to perform a full anti-virus scan, then a user whose profile is inferred as relatively experienced with malware will be simply instructed to run a full anti-virus scan. Conversely, a user whose profile is inferred as relatively inexperienced with malware will receive a longer set of simple, non-technical instructions such as "Press the 'Start' button... Type 'Windows Security' into the search bar... Click on the 'Windows Security' app from the search results...", etc.

In one embodiment, cybersecurity proficiency domains and subdomains may include, for example, Security and Risk Management that involves establishing the security governance program, risk management processes, legal and regulatory compliance, and business continuity planning; Asset Security that focuses on protecting the organization's information and assets, including defining sensitive data, classification, handling requirements, and ensuring proper retention and destruction; Security Architecture and Engineering that concerns the design, implementation, and review of secure physical and logical assets. This includes cryptographic solutions, secure site design, and vulnerability management; Communication and Network Security that addresses the security of network architecture, transmission methods, and communication channels. Key topics include network segmentation, protocols (e.g., TCP/IP), and secure network components; Identity and Access Management (IAM) that involves managing the identity lifecycle, authentication, authorization mechanisms (e.g., multi-factor authentication), and access control models to ensure only authorized entities have access to systems and data; Security Assessment and Testing that focuses on verifying the effectiveness of security controls through various testing methods. Subdomains include vulnerability assessments, penetration testing, and security audits; Security Operations that encompasses the day-to-day activities required to maintain the confidentiality, integrity, and availability of assets. This includes incident response, logging, monitoring, and patch management; Software Development Security that ensures security is an integral part of the software development lifecycle. Subdomains involve secure coding practices, application security testing, and the security of development environments.

In one embodiment, the LLM-based system for profiling the technical proficiency of chatbot users and performing adaptation in the chatbot response, comprisses a computerized device with at least one processor and associated memory for storing operational software. The computerized device is configured to receive an encountered problem by a troubleshooting chatbot via a user prompt; use a profile inference LLM to obtain inferred profiles of chatbot users' technical proficiency regarding cybersecurity troubleshooting, by analyzing current prompt as entered by the user, from a data storage; the most recently updated user profile, which encapsulates the past user data; troubleshooting-oriented cybersecurity taxonomy consisting of proficiency domains and subdomains; a collection of inferred profiles of all users; hardware, software or networking-related data collected from the user's device; generate a vector of profile scores that quantify troubleshooting-oriented cybersecurity proficiency subdomains; update the user's inferred profile by sending the inferred profile to the collection and replacing the older profile of the user by an updated profile; send the inferred profile to a response adaptation LLM, along with the response generated by the chatbot; adapt the technical instructions, produced by the chatbot to the inferred user's profile; send the profile-adapted response to the user, to follow the chatbot's instructions.

As various embodiments and examples have been described and illustrated, it should be understood that variations will be apparent to one skilled in the art without departing from the principles herein. Accordingly, the invention is not to be limited to the specific embodiments described and illustrated in the drawings.

### REFERENCES

1) Ait Baha, T., El Hajji, M., Es-Saady, Y., and Fadili, H. (2023). The power of personalization: A systematic review of personality-adaptive chatbots. SN Computer Science, 4(5):661.
2) Alsharhan, A., Al-Emran, M., and Shaalan, K. (2023). Chatbot adoption: A multi perspective systematic review and future research agenda. IEEE Transactions on Engineering Management.
3) Beale, J., Orebaugh, A., and Ramirez, G. (2006). Wireshark & Ethereal network protocol analyzer toolkit. Elsevier.
4) Fan, W., Ding, Y., Ning, L., Wang, S., Li, H., Yin, D., Chua, T.-S., and Li, Q. (2024). A survey on rag meeting Ilms: Towards retrieval-augmented large language models. In Proceedings of the 30th ACM SIGKDD Conference on Knowledge Discovery and Data Mining, pages 6491-6501.
5) Hildebrand, C. and Bergner, A. (2019). Ai-driven sales automation: Using chatbots to boost sales. NIM Marketing Intelligence Review, 11(2):36-41.
6) Jothilakshmi, S. and Bharathi, R. (2023). Survey on collaborative filtering technique for recommender system using deep learning. In Computer Vision and Machine Intelligence Paradigms for SDGs: Select Proceedings of ICRTAC-CVMIP 2021, pages 217-225. Springer.
7) Juipa, A., Guzman, L., and Diaz, E. (2024). Sentiment analysis-based chatbot system to enhance customer satisfaction in technical support complaints service for telecommunications companies. ICSBT 2024, page 28.
8) Misischia, C. V., Poecze, F., and Strauss, C. (2022). Chatbots in customer service: Their relevance and impact on service quality. Procedia Computer Science, 201:421-428.
9) Patil, R. and Gudivada, V. (2024). A review of current trends, techniques, and challenges in large language models (Ilms). Applied Sciences, 14(5):2074.
10) Saha, D., Tarek, S., Yahyaei, K., Saha, S. K., Zhou, J., Tehranipoor, M., and Farahmandi, F. (2024). Llm for soc security: A paradigm shift. IEEE Access.
11) Savastano, M., Biclesanu, I., Anagnoste, S., Laviola, F., and Cucari, N. (2024). Enterprise chatbots in managers' perception: a strategic framework to implement successful chatbot applications for business decisions. Management Decision.
12) Zhou, Z., Zhang, L., and Yang, N. (2023). Contrastive collaborative filtering for cold-start item recommendation. In Proceedings of the ACM Web Conference 2023, pages 928-937.

## Claims

1. An LLM-based method for profiling the technical proficiency of chatbot users and performing adaptation in the chatbot response, comprising:
a) receiving an encountered problem by a troubleshooting chatbot via a user prompt;
b) using a profile inference LLM to obtain inferred profiles of chatbot users' technical proficiency regarding cybersecurity troubleshooting, by analyzing:
b.1) current prompt as entered by said user, from a data storage;
b.2) the most recently updated user profile, which encapsulates the past user data;
b.3) troubleshooting-oriented cybersecurity taxonomy consisting of proficiency domains and subdomains;
b.4) a collection of inferred profiles of all users;
b.5) hardware, software or networking-related data collected from the user's device;
c) generating a vector of profile scores that quantify troubleshooting-oriented cybersecurity proficiency subdomains;
d) updating the user's inferred profile by:
c.1) sending the inferred profile to said collection;
c.2) replacing the older profile of said user by an updated profile;
e) sending said inferred profile to a response adaptation LLM, along with the response generated by said chatbot;
f) adapting the technical instructions, produced by said chatbot to the inferred user's profile; and
g) sending the profile-adapted response to said user, to follow the chatbot's instructions.

2. The method according to claim 1, further comprising allowing the user to initiate further interactions with the chatbot if further instructions or clarifications are required.

3. The method according to claim 1, further comprising adjusting the terminology and explanation depth of the chatbot response, to generate a personalized interaction.

4. The method according to claim 1, wherein the inferred profile is generated by:
a) receiving as input a variety of user- and end point-related informative inputs and returning as output a numerical vector representation of the user's inferred profile;
b) assigning a score to each subdomain in the taxonomy.

5. The method according to claim 1, wherein the inferred profile is generated using one or more of the following:
- Machine Learning (ML);
- Deep Learning (DL);
- Natural Language Processing (NLP);
- Large Language Models (LLMs).

6. The method according to claim 1, wherein a user's prompt is associated by the profile inference LLM to a subdomain for which there is no past user interaction.

7. The method according to claim 1, further comprising performing gradual profile calibration using weighted moving average among past and current proficiency scores.

8. The method according to claim 1, further comprising performing gradual profile calibration using a feedback loop which is based on the subsequent user prompt.

9. An LLM-based system for profiling the technical proficiency of chatbot users and performing adaptation in the chatbot response, comprising a computerized device with at least one processor and associated memory for storing operational software, which is adapted to:
a) receive an encountered problem by a troubleshooting chatbot via a user prompt;
b) use a profile inference LLM to obtain inferred profiles of chatbot users' technical proficiency regarding cybersecurity troubleshooting, by analyzing:
b.1) current prompt as entered by said user, from a data storage;
b.2) the most recently updated user profile, which encapsulates the past user data;
b.3) troubleshooting-oriented cybersecurity taxonomy consisting of proficiency domains and subdomains;
b.4) a collection of inferred profiles of all users;
b.5) hardware, software or networking-related data collected from the user's device;
c) generate a vector of profile scores that quantify troubleshooting-oriented cybersecurity proficiency subdomains;
d) update the user's inferred profile by:
d.1) sending the inferred profile to said collection;
d.2) replacing the older profile of said user by an updated profile;
e) send said inferred profile to a response adaptation LLM, along with the response generated by said chatbot;
f) adapt the technical instructions, produced by said chatbot to the inferred user's profile; and
g) send the profile-adapted response to said user, to follow the chatbot's instructions.
